# EUROPÄISCHE PATENTSCHRIFT

(11) **EP 1 055 677 B1**
(45) Veröffentlichungstag und Bekanntmachung des Hinweises auf die Patenterteilung: **05.03.2003**
(21) Anmeldenummer: 00109475.4
(22) Anmeldetag: 04.05.2000
(51) Int. Cl.: C07F 9/32

(54) **Verfahren zur Herstellung von Phosphinsäureestern**
Process for the preparation of phosphinic acid esters
Procédé de préparation d'esters d'acides phosphiniques

(30) Priorität: 25.05.1999 DE 19923617
(43) Veröffentlichungstag der Anmeldung: 29.11.2000
(73) Patentinhaber: Clariant GmbH, 65929 Frankfurt am Main (DE)
(72) Erfinder: Hörold, Sebastian, Dr., Erftstadt (DE); Weferling, Norbert, Dr., 50354 Hürth (DE); Breuer, Heinz-Peter, 50354 Hürth (DE); Sicken, Martin, Dr., 51149 Köln (DE)

(56) Entgegenhaltungen:
- EP-A- 0 011 245
- EP-A- 0 969 008
- US-A- 2 957 931
- K. SASSE: "Organische Phosphorverbindungen Teil 1" 1963 , HOUBEN-WEYL METHODEN DER ORGANISCHEN CHEMIE,DE,GEORGE THIEME VERLAG, STUTTGART 4. AUFLAGE, XII/1 XP000941849 * Seite 320 *
- K. SASSE: "Organische Phosphorverbindungen Teil 1" 1963 , HOUBEN-WEYL METHODEN DER ORGANISCHEN CHEMIE,DE,GEORGE THIEME VERLAG, STUTTGART 4. AUFLAGE, XII/1 XP000941848 * Seite 316 - Seite 317 *

## Beschreibung

Die vorliegende Erfindung betrifft ein Verfahren zur Herstellung von Phosphinsäureestern sowie die Verwendung der nach diesem Verfahren hergestellten Produkte.

Phosphinsäureester stellen wertvolle Synthesebausteine dar und können beispielsweise für die Herstellung von Polymeren und Kunststoffen verwendet werden, um schwerentflammbare Materialien zu erhalten.

So beschreibt die DE 26 52 007 A1 schwerentflammbare Epoxidharze durch Einbau carboxyninktioneller Phosphinsäuren. Die US 5,399,428 A1 beschreibt flammwidrige lineare Polyester durch Einbau von carboxyfunktionellen Phosphinsäuren.

Die DE 25 40 283 A1 beschreibt die Addition von Phosphinen an α,β-ungesättigte Carbon-, säuren in Gegenwart wäßriger Salzsäure und anschließender Oxidation.

Die DE 28 49 003 beschreibt die Herstellung phosphorhaltiger Cyanhydrinderivate durch Addition von Phosphonigsäurestern an Acroleincyanhydrinderivate.

Phosphinsäureester werden erhalten, wenn man Phosphonigsäuremonoester in Gegenwart peroxidischer Katalysatoren an 1-Olefine addiert. Die Ausbeuten sind aber nur gering. Die Addition von Phosphonigsäuremonoestern an aktivierte Doppelbindungen in Gegenwart von Alkoholaten als Katalysator verläuft besser. Als ungesättigte Verbindungen eignen sich α,β-ungesättigte Carbonsäurester oder -nitrile, α,β-ungesättigte Ketone sowie Alkyl-vinyl-sulfone und Essigsäurevinylester (Houben-Weyl, Band 12/1, S. 258-259).

Die Phosphonigsäuremonoester selbst werden aus Phosphonigsäuredihalogeniden durch Umsetzung mit Alkoholen oder durch Hydrolyse und anschließende Veresterung hergestellt.

Funktionelle Phosphinsäuren werden erhalten, in dem man Phosphonigsäure-dihalogenide (Dihalogenphosphine) mit aktivierten olefinischen Verbindungen wie z.B. Acrylsäure- oder Methacrylsäurederivaten umsetzt und anschließend hydrolysiert (Houben-Weyl, Band 12/1, S. 230; K.K. Khairullin, T.I. Sobchuk, A.N. Pudovik, Zh. Obshch. Khim. 37, 710 (1967)). Als Nebenprodukte fallen bei der Hydrolyse mit organischen Säuren deren Halogenide an.

Darüber hinaus können Phosphonigsäure-dihalogenide mit Alkylhalogeniden in Gegenwart von Aluminiumchlorid umgesetzt werden (Houben-Weyl, Band 12/1, S. 232).

Phosphinsäureester können auch aus Phosphonigsäuredialkylestern durch Michaelis-Arbuzov-Reaktion hergestellt werden. Die vorgenannten Phosphonigsäuredialkylester wiederum werden aus Phosphonigsäuredihalogeniden und Hydroxyverbindungen hergestellt.

Die vorgenannten, als Edukte für andere Synthesen einsetzbaren Phosphonigsäure-dihalogenide, z.B. Methyldichlorphosphin, werden selbst bisher in einer aufwendigen Synthese aus Phosphortrihalogeniden und Alkylhalogeniden in Gegenwart von Aluminiumchlorid hergestellt (Houben-Weyl, Band 12/1, S. 306). Die Reaktion ist stark exotherm und technisch nur schwierig zu beherrschen. Es werden zudem verschiedene Nebenprodukte gebildet, die, wie zum Teil auch die vorgenannten Ausgangsprodukte, giftig und/oder korrosiv, also höchst unerwünscht, sind.

Es besteht daher ein Bedarf an Verfahren zur Herstellung von Phosphinsäureestern, welches auf einfache Art und Weise durchführbar ist und bei dem einheitliche Produkte in hoher Ausbeute erhalten werden. Auch sollte ein solches Verfahren den bisher bekannten umwelttechnisch deutlich überlegen sein.

Der Erfindung liegt somit die Aufgabe zugrunde, ein Verfahren zur Herstellung von Phosphinsäureestern zur Verfügung zu stellen, das die vorgenannten Nachteile vermeidet und von elementarem gelbem Phosphor als Edukt ausgeht.

Diese Aufgabe wird gelöst durch ein Verfahren der eingangs beschriebenen Art, dadurch gekennzeichnet, daß man
a) elementaren gelben Phosphor mit Alkylierungsmitteln in Gegenwart einer Base zu einem Gemisch, welches als Hauptbestandteile die (Metall)salze der Alkylphosphonigen, Phosphorigen und Hypophosphorigen Säure enthält, umsetzt
b) die Hauptbestandteile des Gemisches aus a) zu einer Estermischung verestert
c) den Ester der Alkylphosphonigen Säure aus der Estermischung isoliert
d) den so erhaltenen Ester der Alkylphosphonigen Säure an ein Olefin mit funktioneller Gruppe addiert.

Das erfindungsgemäße Verfahren weist gegenüber den bisher bekannten Verfahren erhebliche Vorteile auf, da es in der Produktverteilung eine positive Bilanz aufweist und zugleich die als negativ zu beurteilenden Edukte Phosphine und Phosphonigsäure-dihalogenide vermeidet und auch keine halogenierten organischen Nebenprodukte erzeugt.

Bevorzugt handelt es sich bei den Alkylierungsmitteln um Alkylhalogenide, Dialkylsulfate, Trialkylphosphate, Dialkylcarbonate und/oder um Ameisensäureorthoester.

Besonders bevorzugt werden als Alkylierungsmittel Methylchlorid, Methylbromid und/oder Dimethylsulfat eingesetzt.

Bevorzugt handelt es sich bei den Basen um Hydroxide, Carbonate, Bicarbonate, Amide, Alkoholate und/oder Aminbasen, wie etwa Amine und Ammoniak.

Bevorzugt wird die Reaktion im Schritt a) in einem Zwei-Phasen-System aus wäßrigem Alkali- oder Erdalkalihydroxid oder Gemischen davon und einem organischen Lösungsmittel durchgeführt.

Bevorzugt werden im Schritt a) als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, eingesetzt.

Besonders bevorzugt wird als organisches Lösungsmittel Toluol, allein oder in Kombination mit Alkoholen, eingesetzt.

Gegebenenfalls kann die Reaktion auch in einem nicht-wäßrigem System ausgeführt werden, etwa durch Einsatz von festem Natriumhydroxid oder Aminen.

Bevorzugt wird die Reaktion in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt beträgt die Temperatur bei der Reaktion -20 bis + 80 °C.

Besonders bevorzugt beträgt die Temperatur -10 bis +30 °C.

Bevorzugt wird die Reaktion unter einem Druck von 0 bis 10 bar durchgeführt.

Bevorzugt wird das erfindungsgemäße Verfahren im Schritt a) so ausgeführt, daß man den gelben Phosphor in einem Lösungsmittel oder einem Lösungsmittelgemisch suspendiert oder löst und dann mit Alkylhalogenid und einer Verbindung der Formel MOH oder M'(OH)₂ oder Gemischen davon, in denen M ein Alkalimetall und M' ein Erdalkalimetall bedeutet, umsetzt.

Bevorzugt werden der gelbe Phosphor und das Alkylhalogenid im molaren Verhältnis von 1:1 bis 1:3 miteinander umgesetzt, wobei das molare Verhältnis von gelbem Phosphor zur Verbindung der Formel MOH oder M'(OH)₂ 1:1 bis 1:5 beträgt.

Bevorzugt werden die Hauptbestandteile des Gemisches aus a) im Schritt b) mit einem linearen oder verzweigten Alkohol der algemeinen Formel R-OH, wobei R für einen linearen oder verzweigten Alkylrest mit 1 bis 10 Kohlenstoffatomen steht, verestert.

In einer anderen bevorzugten Ausführungsform des erfindungsgemäßen Verfahrens werden die Hauptbestandteile des Gemisches aus a) mit Mineralsäuren eine Mischung der Alkylphoshphonigen, Phosphorigen und Hypophosphorigen Säuren überführt, wobei man gleichzeitig die (Metall)salze der Mineralsäuren ausfällt und anschließend die Mischung dieser Säuren verestert.

Bevorzugt wird das bei der Veresterung gebildete Wasser durch Azeotropdestillation entfernt.

Mit anderen Worten kann die Veresterung der Phosphonigen Säure zum entsprechenden Monoester durch Umsetzung mit höhersiedenen Alkoholen unter Entfernung des gebildeten Wassers durch Azeotropdestillation erreicht werden.

Bevorzugt wird hierbei die Fällung der Metallsalze, üblicherweise der Alkali- bzw. Erdalkali-Mineralsalze mittels Austausch des Lösungsmittels Wasser durch den in Reaktionsschritt b) zu verwendenden Alkohol durchgeführt.

Bevorzugt wird vor der Veresterung das bereits ausgefällte Alkali- oder Erdalkali-Mineralsalz abfiltriert.

Bevorzugt handelt es sich bei dem Alkohol um n-, i-Butanol, n-Hexanol, Ethylhexanol und/oder Amylalkohol.

Bevorzugt handelt es sich bei den Mineralsäuren um Salzsäure, Schwefelsäure und/oder Phosphorsäure.

Besonders bevorzugt handelt es sich bei den Mineralsäuren um Salzsäure.

Bevorzugt werden die während Schritt a) in geringen Mengen entstandenen Phosphine durch Oxidation entfernt.

Bevorzugt wird Wasserstoffperoxid als Oxidationsmittel verwendet.

Bevorzugt wird im Schritt c) der Ester der Alkylphosphonigen Säure destillativ entfernt.

Bevorzugt handelt es sich bei dem Ester der Alkylphosphonigen Säure um Methylphosphonigsäure-n-butylester, Methylphosphonigsäure-iso-butylester Methylphosphonigsäure-nhexylester, Methylphosphonigsäure-2-ethylhexylester und/oder Methylphosphonigsäure-amylester.

Bevorzugt wird im Schritt d) in Anwesenheit von Katalysatoren addiert.

Bevorzugt handelt es sich dabei um basische Katalysatoren. Alternativ können auch Säuren oder kationische Radikalstarter eingesetzt werden.

Bevorzugt handelt es sich bei den basischen Katalysatoren um Alkali- und/oder Erdalkalialkoholate.

Bevorzugt handelt es sich bei den Olefinen mit funktionellen Gruppen um α,β-ungesättigte Carbonsäurester, amide oder -nitrile, α,β-ungesättigte Ketone sowie Alkyl-vinyl-sulfone und Essigsäurevinylester.

Bevorzugt handelt es sich bei den Olefinen mit funktionellen Gruppen um α,β-ungesättigte Carbonsäureester aliphatischer oder cycloaliphatischer Alkohole mit 1 bis 20 C-Atomen oder um α,β-ungesättigte Carbonsäureester mehrwertiger Alkohole mit 2 bis 4 Hydroxylgruppen. und 2 bis 20 C-Atomen.

Bevorzugt handelt es sich bei den Olefinen mit funktionellen Gruppen um Derivate der Acrylsäure nach der allgemeinen Formel (I), 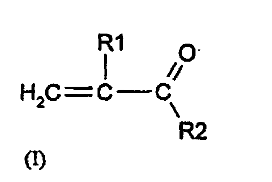 wobei R1 CH₃ oder H und R2 eine Estergruppe ein- oder mehrwertiger Alkohole mit 1-12 C-Atomen oder eine Amingruppe bedeutet.

Bevorzugt handelt es sich bei den Olefinen mit funktionellen Gruppen um Acroleincyanhydrin-Verbindungen nach Formel (II) 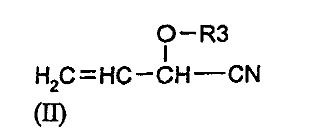 mit R3 = Acetyl oder Propionyl.

Bevorzugt handelt es sich bei den Olefinen mit funktionellen Gruppen um Itaconsäurederivate der allgemeinen Formel (III) mit R' = Alkylgruppe mit 1-12 C-Atomen.

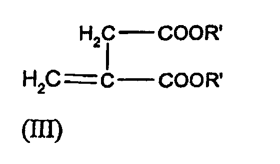

Bevorzugt handelt es sich bei dem Olefin mit funktioneller Gruppe um Hydroxyethylacrylat, Acrylsäuremethylester, Acrylsäureethylester, Acrylsäurebutylester, Acrylsäure-2-ethylhexylester, Hydroxyethylmethacrylat, Methacrylsäuremethylester, Methacrylsäureethylester, Itaconsäuredimethylester, Itaconsäurediethylester oder Acroleincyanhydrinacetat.

Bevorzugt handelt es sich bei der Alkylphosphonigen Säure um Methanphosphonige Säure.

Die nach dem erfindungsgemäßen Verfahren hergestellten funktionellen Phosphinsäuren **können** als reaktive Flammschutzmittel für Polymere **verwendet werden.**

Die nach dem erfindungsgemäßen Verfahren hergestellten funktionellen Phosphinsäuren **können** als reaktive Flammschutzmittel für thermoplastische Polymere wie Polyethylenterephthalat, Polybutylenterephthalat oder Polyamid **verwendet werden**.

Die nach dem erfindungsgemäßen Verfahren hergestellten funktionellen Phosphinsäuren **können** als reaktive Flammschutzmittel für duroplastische Harze wie ungesättigte Polyesterharze, Epoxidharze, Polyurethane oder Acrylate **verwendet werden.**

Die nach dem erfindungsgemäßen Verfahren hergestellten funktionellen Phosphinsäuren **können** als Vorprodukte zur chemischen Synthese von anderen, phosphorhaltigen Verbindungen **verwendet werden.**

Überraschenderweise wurde gefunden, daß sich elementarer gelber Phosphor nach dem Schritt a) des erfindungsgemäßen Verfahrens mit Alkylierungsmitteln im Zweiphasensystem (organisches Lösungsmittel/Base) und ggf. in Anwesenheit eines (Phasen-Transfer-)Katalysators unter äußerst milden Bedingungen zum (Metall)salz der entsprechenden Alkylphosphonigen Säure RP(:O)HOH umsetzen läßt.

Daneben können geringe Mengen an Dialkylphosphinsäuren, Trialkylphosphanoxid R₃P(:O), Dialkylphosphanoxid und nicht identifizierte Phosphorverbindungen entstehen, die auf übliche Weise aus dem Produktgemisch entfernt werden. Als Nebenprodukt entsteht ferner Wasserstoff, der problemlos aus dem Reaktionsgemisch abgetrennt werden kann. Die vorgenannten Dialkylphosphinsäuren lassen sich aus dem Reaktionsgemisch abtrennen und können andersweitig eingesetzt oder weiterverarbeitet werden.

Überraschenderweise entstehen nach dem erfindungsgemäßen Verfahren weder Phosphin (PH₃) noch Alkylphosphane (RPH₂, R₂PH) in nennenswerten Mengen. Durch Wahl geeigneter Reaktionsbedingungen - wie dem Hinzufügen geringer Anteile von Alkoholen zur organischen. Phase - wird die Bildung sämtlicher nicht identifizierter phosphorhaltiger Nebenprodukte zugunsten des Hauptprodukts, den (Metall)salzen der Alkylphosphonige Säure, auf ein überraschend geringes Maß von wenigen Mol% des eingesetzten gelben Phosphors minimiert.

Das erfindungsgemäße Verfahren kann beispielsweise so ausgeführt werden, daß man das Lösungsmittel zusammen mit dem Phasen-Transfer-Katalysator vorlegt und ggf. über den Schmelzpunkt des gelben Phosphors hinaus erwärmt, dann den elementaren (gelben) Phosphor zufügt, das Gemisch unter starkem Rühren auf Temperaturen von beispielsweise -10 bis +30 °C abkühlt und anschließend-das Alkylierungsmittel zufügt.

Die Reaktion wird durch Zugabe der Base gestartet. Nach Beendigung der Reaktion kann das Reaktionssystem beispielsweise mit Wasser verdünnt werden und anschließend werden die leichtflüchtigen Anteile (H₂, PH₃, RPH₂, R₂PH und überschüssiges Alkylierungsmittel etc.) entfernt.

Man erhält hiernach ein basenhaltiges/organisches Zwei-Phasen-System, dessen Phasen getrennt werden. Die Inhaltsstoffe aus den Phasen werden analytisch bestimmt.

Die Reaktionspartner können auch in anderer Reihenfolge zusammengegeben werden, beispielsweise dadurch, daß man diese kontinuierlich in dem oben definierten Molverhältnis in einen Reaktor (Druckrohr, Druckreaktor oder Kaskade) einträgt und nach Verweilzeiten von 0,5 bis 2 h aus dem Reaktor wieder ausschleust. Die nach der Phasentrennung erhaltene organische Phase, die noch die Hauptmenge des ggf. eingesetzten Phasen-Transfer-Katalysators enthält, wird zweckmäßigerweise recyclisiert.

Die Isolierung der reinen Alkylphosphonigen Säuren aus dem Gemisch erfolgt in besonders einfacher Weise über die entsprechenden Ester, die im Gegensatz zu den Salzen und Säuren der Alkylphosphonigen Säuren in schonender Weise destillativ aus dem Gemisch isoliert werden können. Alle anderen im Gemisch enthaltenen Verbindungen werden in den Schritten b) und c) des erfindungsgemäßen Verfahrens zwar teilweise auch verestert, bilden aber keine leicht destillierbaren Produkte, so daß die Abtrennung der Alkylphosphonigsäureester in überraschend vollständiger und reiner Form gelingt.

Die Erfindung wird durch die nachstehenden Beispiele erläutert:

### Beispiel 1

### a1) Umsetzung von gelbem Phosphor mit Alkylhalogenid

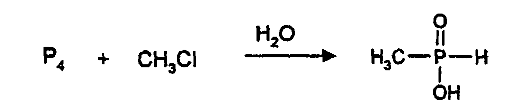

In einem 5 L Edelstahl-Druckreaktor wurde eine Lösung von 26,1 (0.05 Mol) Tributylhexadecylphosphoniumbromid in 1000 mL Toluol vorgelegt und auf 60°C vorgeheizt. Nach Zugabe von 62 g (2 Mol) gelbem Phosphor wurde unter intensivem Rühren auf -10°C abgekühlt und dann 202 g (4 Mol) Methylchlorid einkondensiert. Danach wurde innerhalb 2 Stunden 400 g 50%ige wässrige Natronlauge zudosiert, wobei die Temperatur auf -10°C gehalten wurde.

Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.

Die wäßrige Phase (Auswaage: 920 g) enthielt 65,6 Mol% Methylphosphonige Säure, 14,9 Mol% Phosphorige Säure und 13,7 Mol% Hypophosphorige Säure und 2,8 Mol% Dimethylphosphinsäure in Form ihrer Natriumsalze sowie 3 Mol% Dimethyldiphosphin.

### a2) Überführung der Natriumsalze in die Säuren/NaCl-Abtrennung:

Die Lösung wurde sukzessive mit 60 g 5%iger wäßriger Wasserstoffperoxidlösung, mit 240 g 36%iger Salzsäure sowie mit 400 g 2-Ethylhexanol versetzt. Nach Abdestillation des enthaltenen Wassers am Wasserabscheider wurde das ausgefallene Natriumchlorid abfiltriert und mit 100 g 2-Ethylhexanol gewaschen.

### b) Veresterung von Methanphosphonigsäure im Reaktionsgemisch

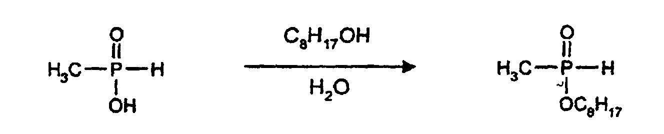

Die Ethylhexanol-Lösungen aus Schritt a2) wurden vereinigt und unter leicht reduziertem Druck ca. 6 h am Wasserabscheider auf ca 120 °C erhitzt.

### c) Isolierung des Esters

Das veresterte Reaktionsgemisch wurde anschließend destillativ vom überschüssigen Ethylhexanol befreit und einer Vakuumdestillation unterzogen. Bei einem Druck von 0.3 mm und einer Kopf-Temperatur von 75 °C gingen 220 g Methanphosphonigsäure-2ethylhexylester über. Das Produkt fällt in Form einer klaren, farblosen Flüssigkeit in einer Reinheit von über 99% an, entsprechend einer Ausbeute von 58 %, bezogen auf den eingesetzten gelben Phosphor. Analysen: 16.0 % Phosphor (Theorie: 16.2 %); ³¹P-NMR: Dublett bei 34 ppm (Diastereomerenpaar).

### Beispiel 2:

### Addition von Methanphosphonigsäure-2ethylhexylester an Acrylsäurehydroxyethylester (radikalische Katalyse)

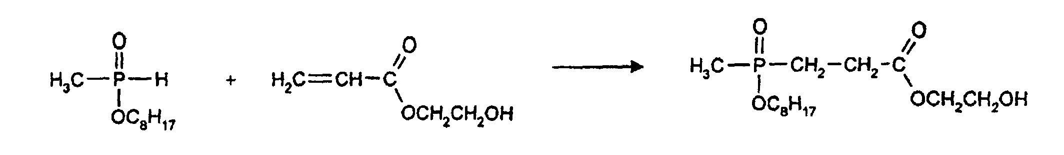

In einem 500 ml Fünfhalskolben mit Thermometer, Rückflußkühler, Intensivrührer und Tropftrichter werden 128,8 g (90,5%ig, 0,607 mol) Methanphosphonigsäure-2ethylhexylester und 0,2 g Trigonox 25-C-75 vorgelegt und auf 80 °C vorgeheizt. Unter Rühren werden bei 80 °C 22,8 g Acrylsäurehydroxyethylester (0,2 mol) während 30 min dazugetropft. Die Reaktion ist schwach exotherm.
Anschließend wird noch 10 min bei 80 °C nachreagieren lassen. Es wird eine schwach gelb gefärbte Flüssigkeit erhalten. Das ³¹P-NMR zeigt 21 % 2-hydroxyethyl-2-carboxyethylmethyl-phosphinsäure-2ethylhexylester bei 54 ppm und 77% nicht umgesetzten Methanphosphonigsäure-2ethylhexylester (34 ppm). Der nicht umgesetzte Methanphosphonigsäure-2ethylhexylester wird durch Vakuumdestillation bei 0,1 mm und 80 °C Kopftemperatur entfernt. Man erhält 53,4 g Produkt, die Reinheit beträgt etwa 80%.

### Beispiel 3:

### Addition von Methanphosphonigsäure-2ethylhexylester an Acrylsäurehydroxyethylester (anionische Katalyse)

In einem 500 ml Fünfhalskolben mit Thermometer, Rückflußkühler, Intensivrührer und Tropftrichter werden 78,8 g (0,41 mol) Methanphosphonigsäure-2ethylhexylester und 47,6 g Acrylsäurehydroxyethylester vorgelegt. Unter Rühren werden 5 ml Natriummethylat (30%) in einer solchen Geschwindigkeit dazugetropft, daß sich eine Reaktionstemperatur von max. 120°C einstellt. Anschließend wird noch 10 min bei 80 °C nachreagieren lassen. Es wird eine schwach gelb gefärbte Flüssigkeit erhalten. ³¹P-NMR (CHCl₃): 57 ppm

### Beispiel 4: Addition von Methanphosphonigsäurehydroxyethylhexylester an Acrylnitril

In einem 500 ml Fünfhalskolben mit Thermometer, Rückflußkühler, Intensivrührer und Tropftrichter werden 107,4 g (0,559 mol) Methanphosphonigsäure-2ethylhexylester und 37,4 g Acrylnitril vorgelegt. Unter Rühren werden 4 ml Natriummethylat (30%) in einer solchen Geschwindigkeit dazugetropft, daß sich eine Reaktionstemperatur von 70 °C einstellt.

Anschließend wird noch 10 min bei 80 °C nachreagieren lassen. Es wird eine schwach gelb gefärbte Flüssigkeit erhalten. ³¹P-NMR (CHCl₃): 53-54 ppm

### Beispiel 5:

### Addition von Methanphosphonigsäure-2ethylhexylester an Acrylsäuremethylester

In einem 500 ml Fünfhalskolben mit Thermometer, Rückflußkühler, Intensivrührer und Tropftrichter werden 85 g (0,445 mol) Methanphosphonigsäure-2ethylhexylester und 43 g Acrylsäuremethylester vorgelegt. Unter Rühren werden 4 ml Natriummethylat (30%) in einer solchen Geschwindigkeit dazugetropft, daß sich eine Reaktionstemperatur von 80 °C einstellt. Es wird eine schwach gelb gefärbte Flüssigkeit erhalten. ³¹P-NMR (CHCl₃): 58 ppm

### Beispiel 6:

### Addition von Methanphosphonigsäure-2ethylhexylester an Itaconsäuredimethylester

In einem 500 ml Fünfhalskolben mit Thermometer, Rückflußkühler, Intensivrührer und Tropftrichter werden 57,6g (0,3 mol) Methanphosphonigsäure-2ethylhexylester und 47,4g Itaconsäuredimethylester (0,3 mol) vorgelegt Unter Rühren werden 3 ml Natriummethylat (30%) in einer solchen Geschwindigkeit dazugetropft, daß sich eine Reaktionstemperatur von max. 90 °C einstellt. Anschließend wird noch 1 h bei 50-70 °C nachreagieren lassen. Es wird eine schwach gelb gefärbte Flüssigkeit erhalten. ³¹P-NMR (CHCl₃): 55-56 ppm

### Beispiel 7: Addition von Methanphosphonigsäure-2ethylhexylester an Acroleincyanhydrinacetat

In einem 500 ml Fünfhalskolben mit Thermometer, Rückflußkühler, Intensivrührer und Tropftrichter werden 155,3g Methanphosphonigsäure-2ethylhexylester vorgelegt. Unter Rühren werden bei 130 °C während einer Stunde 50 g Acroleincyanhydrinacetat und 4 g t-Butylperoctoat dazugetropft. Dann wird noch 15 min bei 120 °C nachreagieren lassen und anschließend das Produkt im Hochvakuum bei 170 °C und 0,4 mbar abdestilliert. Man erhält 112 g 3-Acetoxy-3-cyano-propyl)-methyl-phosphinsäure-2ethylhexylester.

## Patentansprüche

1. Verfahren zur Herstellung von Phosphinsäureestern, **dadurch gekennzeichnet, daß** man
a) elementaren gelben Phosphor mit Alkylierungsmitteln in Gegenwart einer Base zu einem Gemisch, welches als Hauptbestandteile die (Metall)salze der Alkylphosphonigen, Phosphorigen und Hypophosphorigen Säure enthält, umsetzt
b) die Hauptbestandteile des Gemisches aus a) zu einer Estermischung verestert
c) den Ester der Alkylphosphonigen Säure aus der Estermischung isoliert
d) den so erhaltenen Ester der Alkylphosphonigen Säure an ein Olefin mit funktioneller Gruppe addiert.

2. Verfahren nach Anspruch 1, **dadurch gekennzeichnet, daß** es sich bei den Alkylierungsmitteln um Alkylhalogenide, Dialkylsulfate, Trialkylphosphate, Dialkylcarbonate und/oder um Ameisensäureorthoester handelt.

3. Verfahren nach Anspruch 1 oder 2, **dadurch gekennzeichnet, daß** als Alkylierungsmittel Methylchlorid, Methylbromid und/oder Dimethylsulfat eingesetzt werden.

4. Verfahren nach einem oder mehreren der Ansprüche 1 bis 3, **dadurch gekennzeichnet, daß** es sich bei den Basen um Hydroxide, Carbonate, Bicarbonate, Amide, Alkoholate und/oder Aminbasen handelt.

5. Verfahren nach einem oder mehreren der Ansprüche 1 bis 3, **dadurch gekennzeichnet, daß** die Reaktion im Schritt a) in einem Zwei-Phasen-System aus wäßrigem Alkali- oder Erdalkalihydroxid oder Gemischen davon und einem organischen Lösungsmittel durchgeführt wird.

6. Verfahren nach **Anspruch 5**, **dadurch gekennzeichnet, daß** als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, eingesetzt werden.

7. Verfahren nach **Anspruch 5 oder 6**, **dadurch gekennzeichnet, daß** als organisches Lösungsmitte1 Toluol, allein oder in Kombination mit Alkoholen, eingesetzt wird.

8. Verfahren nach einem oder mehreren der Ansprüche 1 bis 7, **dadurch gekennzeichnet, daß** die Reaktion in Anwesenheit eines Phasen-Transfer-Katalysators durchgeführt wird.

9. Verfahren nach Anspruch 8, **dadurch gekennzeichnet, daß** es sich bei dem Phasen-Transfer-Katalysator um Tetraalkylphosphoniumhalogenide, Triphenylalkylphosphoniumhalogenide oder Tetraorganylammoniumhalogenide handelt.

10. Verfahren nach einem oder mehreren der Ansprüche 1 bis 9, **dadurch gekennzeichnet, daß** die Temperatur bei der Umsetzung mit dem gelben Phosphor -20 bis + 80 °C beträgt.

11. Verfahren nach einem oder mehreren der Ansprüche 1 bis 10, **dadurch gekennzeichnet, daß** die Temperatur bei der Umsetzung mit dem gelben Phosphor 0 bis 30 °C beträgt.

12. Verfahren nach einem oder mehreren der Ansprüche 1 bis 11, **dadurch gekennzeichnet, daß** die Reaktion unter einem Druck von 0 bis 10 bar durchgeführt wird.

13. Verfahren nach einem oder mehreren der Ansprüche 1 bis 12, **dadurch gekennzeichnet, daß** man die Hauptbestandteile des Gemisches aus a) im Schritt b) mit einem linearen oder verzweigten Alkohol der algemeinen Formel R-OH, wobei R für einen linearen oder verzweigten Alkylrest mit 1 bis 10 Kohlenstoffatomen steht, verestert.

14. Verfahren nach einem oder mehreren der Ansprüche 1 bis 12, **dadurch gekennzeichnet, daß** die Hauptbestandteile des Gemisches aus a) mit Mineralsäuren zu einer Mischung der Alkylphosphonigen, Phosphorigen und Hypophosphorigen Säuren umsetzt und gleich zeitig die (Metall)salze der Mineralsäuren ausfällt und anschließend die Mischung dieser Säuren verestert.

15. Verfahren nach einem oder mehreren der Ansprüche 1 bis 14, **dadurch gekennzeichnet, daß** man das bei der Versterung gebildete Wasser durch Azeotropdestillation entfernt.

16. Verfahren nach einem oder mehreren der Ansprüche 1 bis 13, **dadurch gekennzeichnet, daß** es sich bei dem Alkohol um n-, i-Butanol, n-Hexanol, Ethylhexanol und/oder Amylalkohol handelt.

17. Verfahren nach einem oder mehreren der Ansprüche 1 bis 16, **dadurch gekennzeichnet, daß** es sich bei den Mineralsäuren um Salzsäure, Schwefelsäure und/oder Phosphorsäure handelt.

18. Verfahren nach einem oder mehreren der Ansprüche 1 bis 17, **dadurch gekennzeichnet, daß** es sich bei den Mineralsäuren um Salzsäure handelt.

19. Verfahren nach einem oder mehreren der Ansprüche 1 bis 18, **dadurch gekennzeichnet, daß** die im Schritt a) in geringen Mengen entstandenen Phosphine durch Oxidation entfernt werden.

20. Verfahren nach einem oder mehreren der Ansprüche 1 bis 19, **dadurch gekennzeichnet, daß** Wasserstoffperoxid für die Oxidation eingesetzt wird.

21. Verfahren nach einem oder mehreren der Ansprüche 1 bis 20, **dadurch gekennzeichnet, daß** im Schritt c) der Ester der Alkylphosphonigen Säure destillativ entfernt wird.

22. Verfahren nach einem oder mehreren der Ansprüche 1 bis 21, **dadurch gekennzeichnet, daß** es sich bei dem Ester der Alkylphosphonigen Säure um Methylphosphonigsäure-n-butylester, Methylphosphonigsäure-iso-butylester Methylphosphonigsäure-n-hexylester, Methylphosphonigsäure-2-ethylhexylester und/oder Methylphosphonigsäure-amylester handelt.

23. Verfahren nach einem oder mehreren der Ansprüche 1 bis 22, **dadurch gekennzeichnet, daß** man im Schritt d) in Anwesenheit von Katalysatoren addiert.

24. Verfahren nach Anspruch 23, **dadurch gekennzeichnet, daß** es sich um basische Katalysatoren handelt.

25. Verfahren nach Anspruch 23 oder 24, **dadurch gekennzeichnet, daß** es sich bei den basischen Katalystoren um Alkali- und/oder Erdalkalialkoholate handelt.

26. Verfahren nach einem oder mehreren der Ansprüche 1 bis 25, **dadurch gekennzeichnet, daß** es sich bei den Olefinen mit funktionellen Gruppen um α,β-ungesättigte Carbonsäureester, -chloride, -amide oder -nitrile, α,β-ungesättigte Ketone sowie Alkyl-vinyl-sulfone und Carbonsäurevinylester handelt.

27. Verfahren nach einem oder mehreren der Ansprüche 1 bis 26, **dadurch gekennzeichnet, daß** es sich bei den Olefinen mit funktionellen Gruppen um α,β-ungesättigte Carbonsäureester aliphatischer oder cycloaliphatischer Alkohole mit 1 bis 20 C-Atomen handelt oder um Carbonsäureester mehrwertiger Alkohole mit 2 bis 4 Hydroxylgruppen und 2 bis 20 C-Atomen handelt.

28. Verfahren nach einem oder mehreren der Ansprüche 1 bis 27, **dadurch gekennzeichnet, daß** es sich bei den Olefinen mit funktionellen Gruppen um Derivate der Acrylsäure nach der allgemeinen Formel (I), 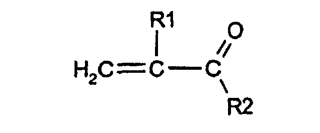 wobei R1 CH₃ oder H und R2 eine Estergruppe ein- oder mehrwertiger Alkohole mit 1-12 C-Atomen oder eine Amingruppe bedeutet, handelt.

29. Verfahren nach einem oder mehreren der Ansprüche 1 bis 28, **dadurch gekennzeichnet, daß** es sich bei den Olefinen mit funktionellen Gruppen um Acroleincyanhydrin-Verbindungen nach Formel (II) 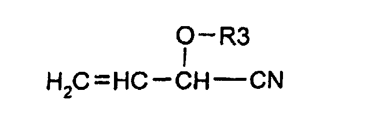 mit R3 = Acetyl oder Propionyl, handelt

30. Verfahren nach einem oder mehreren der Ansprüche 1 bis 29, **dadurch gekennzeichnet, daß** es sich bei den Olefinen mit fünktionellen Gruppen um Itaconsäurederivate der allgemeinen Formel (III) mit R' = Alkylgruppe mit 1-12 C-Atomen, handelt.

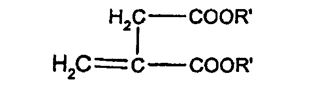

31. Verfahren nach einem oder mehreren der Ansprüche 1 bis 30, **dadurch gekennzeichnet, daß** es sich bei dem Olefin um Hydroxyethylacrylat, Acrylsäuremethylester, Acrylsäureethylester, Hydroxyethylmethacrylat, Methacrylsäuremethylester, Methacrylsäureethylester, Itaconsäuredimethylester, Itaconsäurediethylester und/oder Acroleincyanhydrinacetat handelt.

32. Verfahren nach einem oder mehreren der Ansprüche 1 bis 31, **dadurch gekennzeichnet, daß** es sich bei der Alkylphosphonigen Säure um Methanphosphonige Säure handelt.

## Claims

1. A process for the preparation of phosphinic acid esters, which comprises
a) reacting elemental yellow phosphorus with alkylating agents in the presence of a base to give a mixture which comprises, as principal constituents, the (metal) salts of alkylphosphonous, phosphorous and hypophosphorous acids,
b) esterifying the principal constituents of the mixture from a) to give an ester mixture,
c) isolating the ester of the alkylphosphonous acid from the ester mixture,
d) adding the resultant ester of the alkylphosphonous acid onto an olefin containing a functional group.

2. A process as claimed in claim 1, wherein the alkylating agents are alkyl halides, dialkyl sulfates, trialkyl phosphates, dialkyl carbonates and/or formic acid ortho-esters.

3. A process as claimed in claim 1 or 2, wherein the alkylating agent employed is methyl chloride, methyl bromide and/or dimethyl sulfate.

4. A process as claimed in one or more of claims 1 to 3, wherein the bases are hydroxides, carbonates, bicarbonates, amides, alkoxides and/or amine bases.

5. A process as claimed in one or more of claims 1 to 3, wherein the reaction in step a) is carried out in a two-phase system comprising aqueous alkali or alkaline-earth metal hydroxide or mixtures thereof and an organic solvent.

6. A process as claimed in claim 5, wherein the organic solvents employed are straight-chain or branched alkanes, alkyl-substituted aromatic solvents, water-immiscible or only partially water-miscible alcohols or ethers, alone or in combination with one another.

7. A process as claimed in claim 5 or 6, wherein the organic solvent employed is toluene, alone or in combination with alcohols.

8. A process as claimed in one or more of claims 1 to 7, wherein the reaction is carried out in the presence of a phase-transfer catalyst.

9. A process as claimed in claim 8, wherein the phase-transfer catalyst is a tetraalkylphosphonium halide, triphenylalkylphosphonium halide or tetraorganylammonium halide.

10. A process as claimed in one or more of claims 1 to 9, wherein the temperature during the reaction with the yellow phosphorus is from -20 to +80°C.

11. A process as claimed in one or more of claims 1 to 10, wherein the temperature during the reaction with the yellow phosphorus is from 0 to 30°C.

12. A process as claimed in one or more of claims 1 to 11, wherein the reaction is carried out under a pressure of from 0 to 10 bar.

13. A process as claimed in one or more of claims 1 to 12, wherein the principal constituents of the mixture from a) are esterified in step b) using a linear or branched alcohol of the general formula R-OH, where R is a linear or branched alkyl radical having 1 to 10 carbon atoms.

14. A process as claimed in one or more of claims 1 to 12, wherein the principal constituents of the mixture from a) are reacted with mineral acids to give a mixture of alkylphosphonous, phosphorous and hypophosphorous acids and at the same time the (metal) salts of the mineral acids are precipitated, and the mixture of these acids is subsequently esterified.

15. A process as claimed in one or more of claims 1 to 14, wherein the water formed during the esterification is removed by azeotropic distillation.

16. A process as claimed in one or more of claims 1 to 13, wherein the alcohol is n- or i-butanol, n-hexanol, ethylhexanol and/or amyl alcohol.

17. A process as claimed in one or more of claims 1 to 16, wherein the mineral acid is hydrochloric acid, sulfuric acid and/or phosphoric acid.

18. A process as claimed in one or more of claims 1 to 17, wherein the mineral acid is hydrochloric acid.

19. A process as claimed in one or more of claims 1 to 18, wherein the phosphines formed in small amounts in step a) are removed by oxidation.

20. A process as claimed in one or more of claims 1 to 19, wherein hydrogen peroxide is employed for the oxidation.

21. A process as claimed in one or more of claims 1 to 20, wherein the ester of the alkylphosphonous acid is removed by distillation in step c).

22. A process as claimed in one or more of claims 1 to 21, wherein the ester of the alkylphosphonous acid is n-butyl methylphosphonite, isobutyl methylphosphonite, n-hexyl methylphosphonite, 2-ethylhexyl methylphosphonite and/or amyl methylphosphonite.

23. A process as claimed in one or more of claims 1 to 22, wherein the addition reaction in step d) is carried out in the presence of catalysts.

24. A process as claimed in claim 23, wherein the catalysts are basic catalysts.

25. A process as claimed in claim 23 or 24, wherein the basic catalysts are alkali metal and/or alkaline-earth metal alkoxides.

26. A process as claimed in one or more of claims 1 to 25, wherein the olefins containing functional groups are α,β-unsaturated carboxylic acid esters, chlorides, amides or nitriles, α,β-unsaturated ketones, alkyl vinyl sulfones and vinyl carboxylates.

27. A process as claimed in one or more of claims 1 to 26, wherein the olefins containing functional groups are α,β-unsaturated carboxylic acid esters of aliphatic or cycloaliphatic alcohols having 1 to 20 carbon atoms or carboxylic acid esters of polyhydric alcohols having 2 to 4 hydroxyl groups and 2 to 20 carbon atoms.

28. A process as claimed in one or more of claims 1 to 27, wherein the olefins containing functional groups are acrylic acid derivatives of the general formula (I) 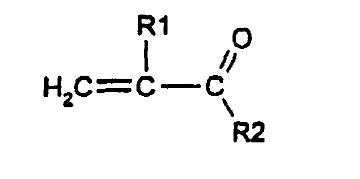 where R1 is CH₃ or H, and R2 is an ester group of a monohydric or polyhydric alcohol having 1-12 carbon atoms or an amino group.

29. A process as claimed in one or more of claims 1 to 28, wherein the olefins containing functional groups are acroleincyanohydrin compounds of the formula (II) 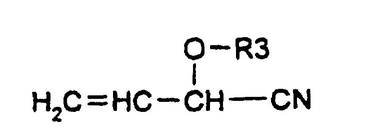 where R3 = acetyl or propionyl.

30. A process as claimed in one or more of claims 1 to 29, wherein the olefins containing functional groups are itaconic acid derivatives of the general formula (III), where R' = alkyl group having 1-12 carbon atoms.

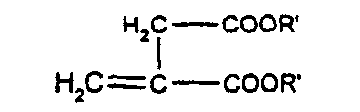

31. A process as claimed in one or more of claims 1 to 30, wherein the olefin is hydroxyethyl acrylate, methyl acrylate, ethyl acrylate, hydroxyethyl methacrylate, methyl methacrylate, ethyl methacrylate, dimethyl itaconate, diethyl itaconate and/or acroleincyanohydrin acetate.

32. A process as claimed in one or more of claims 1 to 31, wherein the alkylphosphonous acid is methanephosphonous acid.

## Revendications

1. Procédé pour la préparation d'esters d'acides phosphiniques, **caractérisé en ce que** l'on met à réagir
a) du phosphore jaune élémentaire avec des agents d'alkylation en présence d'une base pour obtenir un mélange, qui contient comme constituants principaux les sels métalliques de l'acide alkylphosphoneux, phosphoreux et hypophosphoreux ;
b) on estérifie les constituants principaux du mélange issu de a) en un mélange d'esters ;
c) on isole l'ester de l'acide alkylphosphoneux du mélange d'esters ;
d) on réalise l'addition de l'ester de l'acide alkylphosphoneux ainsi obtenu sur une oléfine avec un groupe fonctionnel.

2. Procédé selon la revendication 1, **caractérisé en ce qu'**il s'agit pour les agents d'alkylation d'halogénures d'alkyle, de sulfates de dialkyle, de phosphates de trialkyle, de carbonates de dialkyle et/ou d'orthoesters d'acide formique.

3. Procédé selon la revendication 1 ou 2, **caractérisé en ce qu'**on utilise comme agents d'alkylation le chlorure de méthyle, le bromure de méthyle et/ou le sulfate de diméthyle.

4. Procédé selon une ou plusieurs des revendications 1 à 3, **caractérisé en ce qu'**il s'agit pour les bases d'hydroxydes, de carbonates, de bicarbonates, d'amides, d'alcoolates et/ou de bases amine.

5. Procédé selon une ou plusieurs des revendications 1 à 3, **caractérisé en ce qu'**on réalise la réaction à l'étape a) dans un système à deux phases à partir d'un hydroxyde aqueux de métal alcalin ou alcalino-terreux ou de mélanges de ceux-ci et d'un solvant organique.

6. Procédé selon la revendication 5, **caractérisé en ce qu'**on utilise comme solvants organiques des alcanes à chaîne linéaire ou ramifiée, des solvants aromatiques substitués par un alkyle, des alcools ou des éthers non miscibles ou seulement partiellement à l'eau, seuls ou en combinaison entre eux.

7. Procédé selon la revendication 5 ou 6, **caractérisé en ce qu'**on utilise comme solvant organique le toluène, seul ou en combinaison avec des alcools.

8. Procédé selon une ou plusieurs des revendications 1 à 7, **caractérisé en ce que** la réaction est réalisée en présence d'un catalyseur de transfert de phases.

9. Procédé selon la revendication 8, **caractérisé en ce qu'**il s'agit pour le catalyseur de transfert de phases d'halogénures de tétraalkylphosphonium, d'halogénures de triphénylalkylphosphonium ou d'halogénures de tétraorganylammonium.

10. Procédé selon une ou plusieurs des revendications 1 à 9, **caractérisé en ce que** la température lors de la réaction avec le phosphore jaune s'élève de -20 à +80 °C.

11. Procédé selon une ou plusieurs des revendications 1 à 10, **caractérisé en ce que** la température pendant la réaction avec le phosphore jaune s'élève de 0 à 30 °C.

12. Procédé selon une ou plusieurs des revendications 1 à 11, **caractérisé en ce que** la réaction est réalisée sous une pression de 0 à 10 bar.

13. Procédé selon une ou plusieurs des revendications 1 à 12, **caractérisé en ce que** l'on estérifie les constituants principaux du mélange issu de a) à l'étape b) avec un alcool linéaire ou ramifié de formule générale R-OH, dans laquelle R représente un groupe alkyle linéaire ou ramifié ayant de 1 à 10 atomes de carbone.

14. Procédé selon une ou plusieurs des revendications 1 à 12, **caractérisé en ce que** l'on transforme les constituants principaux du mélange issu de a) avec des acides minéraux en un mélange des acides alkylphosphoneux, phosphoreux et hypophosphoreux, et on précipite immédiatement les sels métalliques des acides minérales et on estérifie ensuite le mélange de ces acides.

15. Procédé selon une ou plusieurs des revendications 1 à 14, **caractérisé en ce qu'**on élimine l'eau formée dans l'estérification par distillation azéotrope.

16. Procédé selon une ou plusieurs des revendications 1 à 13, **caractérisé en ce qu'**il s'agit pour l'alcool du n-, i-butanol, n-hexanol, éthylhexanol et/ou amylalcool.

17. Procédé selon une ou plusieurs des revendications 1 à 16, **caractérisé en ce qu'**il s'agit pour les acides minéraux de l'acide chlorhydrique, l'acide sulfurique et/ou l'acide phosphorique.

18. Procédé selon une ou plusieurs des revendications 1 à 17, **caractérisé en ce qu'**il s'agit pour les acides minéraux de l'acide chlorhydrique.

19. Procédé selon une ou plusieurs des revendications 1 à 18, **caractérisé en ce qu'**on élimine à l'étape a) les phosphines produites en petites quantités par oxydation.

20. Procédé selon une ou plusieurs des revendications 1 à 19, **caractérisé en ce que** l'on utilise du peroxyde d'hydrogène pour l'oxydation.

21. Procédé selon une ou plusieurs des revendications 1 à 20, **caractérisé en ce que** l'on élimine par distillation à l'étape c) l'ester de l'acide alkylphosphoneux.

22. Procédé selon une ou plusieurs des revendications 1 à 21, **caractérisé en ce qu'**il s'agit pour l'ester de l'acide alkylphosphoneux, de l'ester n-butylique d'acide méthylphosphoneux, l'ester isobutylique d'acide méthylphosphoneux, l'ester n-hexylique d'acide méthylphosphoneux, l'ester 2-éthylhexylique d'acide méthylphosphoneux et/ou l'ester amylique d'acide méthylphosphoneux.

23. Procédé selon une ou plusieurs des revendications 1 à 22, **caractérisé en ce qu'**on réalise l'addition à l'étape d) en présence de catalyseurs.

24. Procédé selon la revendication 23, **caractérisé en ce qu'**il s'agit de catalyseurs basiques.

25. Procédé selon la revendication 23 ou 24, **caractérisé en ce qu'**il s'agit pour les catalyseurs basiques d'alcoolates de métaux alcalins et/ou alcalino-terreux.

26. Procédé selon une ou plusieurs des revendications 1 à 25, **caractérisé en ce qu'**il s'agit pour les oléfines avec des groupes fonctionnels d'esters, de chlorures, d'amides ou de nitriles d'acides carboxyliques α,β-insaturés, de cétones α,β-insaturées, ainsi que d'alkylvinylsulfones et d'ester vinylique d'acide carboxylique.

27. Procédé selon une ou plusieurs des revendications 1 à 26, **caractérisé en ce qu'**il s'agit pour les oléfines avec des groupes fonctionnels d'esters d'acides carboxyliques α,β-insaturés d'alcools aliphatiques ou cycloaliphatiques ayant de 1 à 20 atomes de carbone ou **en ce qu'**il s'agit d'esters d'acides carboxyliques d'alcools polyhydroxylés avec de 2 à 4 groupes hydroxyle et de 2 à 20 atomes de carbone.

28. Procédé selon une ou plusieurs des revendications 1 à 27, **caractérisé en ce qu'**il s'agit pour les oléfines avec des groupes fonctionnels de dérivés de l'acide acrylique selon la formule générale (I), 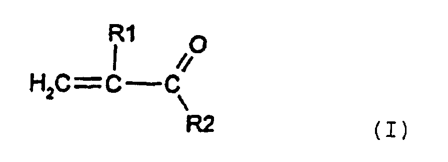 dans laquelle R1 représente CH₃ ou H et R2 représente un groupe ester d'alcools mono- ou polyhydroxylés ayant de 1 à 12 atomes de carbone ou un groupe amine.

29. Procédé selon une ou plusieurs des revendications 1 à 28, **caractérisé en ce qu'**il s'agit pour les oléfines avec des groupes fonctionnels de composés d'acroléine cyanhydrine selon la formule (II) 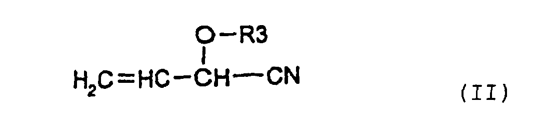 avec R3 = acétyle ou propionyle.

30. Procédé selon une ou plusieurs des revendications 1 à 29, **caractérisé en ce qu'**il s'agit pour les oléfines avec des groupes fonctionnels de dérivés d'acide itaconique de formule générale (III) avec R' = un groupe alkyle ayant de 1 à 12 atomes de carbone.

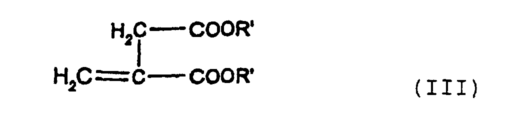

31. Procédé selon une ou plusieurs des revendications 1 à 30, **caractérisé en ce qu'**il s'agit pour l'oléfine d'acrylate d'hydroxyéthyle, d'ester méthylique d'acide acrylique, d'ester éthylique d'acide acrylique, de méthacrylate d'hydroxyéthyle, de méthacrylate de méthyle, de méthacrylate d'éthyle, d'itaconate de diméthyle, d'itaconate de diéthyle et/ou d'acétate d'acroléine-cyanhydrine.

32. Procédé selon une ou plusieurs des revendications 1 à 31, **caractérisé en ce qu'**il s'agit pour l'acide alkylphosphoneux d'acide méthane-phosphoneux.
